# EUROPEAN PATENT APPLICATION

(11) **EP 4 095 469 A1**
(43) Date of publication of application: **30.11.2022**
(21) Application number: 21211297.3
(22) Date of filing: 30.11.2021
(51) Int. Cl.: F27B 9/30, F27B 9/40

(54) **HEAT TREATMENT FURNACE**

(30) Priority: 24.05.2021 JP 2021087119
(71) Applicant: NGK INSULATORS, LTD., Nagoya-shi, Aichi 4678530 (JP); NGK Kilntech, Corporation, Nagoya-shi, Aichi 467-8530 (JP)
(72) Inventor: YAMAGUCHI, Minoru, Aichi, 4678530 (JP); IWATA, Terukazu, Aichi, 4678530 (JP)
(74) Representative: Mewburn Ellis LLP

(57) **Abstract**

A heat treatment furnace disclosed herein may include: a heat treatment unit configured to heat-treat a treatment object; a conveyor provided in the heat treatment unit and configured to convey the treatment object from one end to another end of the heat treatment unit; a heater provided in the heat treatment unit and configured to adjust a temperature in the heat treatment unit; a supply flow path having a supply port unit configured to supply atmospheric gas into the heat treatment unit; an adjustment valve unit provided in the supply flow path and configured to adjust a supply volume of the atmospheric gas supplied from the supply port unit; and a control device configured to control the adjustment valve unit so that the supply volume from the supply port unit changes cyclically while the treatment object is conveyed from the one end to the other end of the heat treatment unit.

## Description

### Technical Field

The art disclosed herein relates to a heat treatment furnace configured to heat-treat a treatment object (such as a lithium positive electrode material).

### Background Art

A treatment object can be heat-treated using a heat treatment furnace (such as a roller hearth kiln). For example, a heat treatment furnace of Japanese Patent Application Publication No. 2009-103331 includes a heat treatment unit configured to heat-treat a treatment object, a conveyor provided in the heat treatment unit and configured to convey a plurality of treatment objects, and a heater provided in the heat treatment unit and configured to adjust a temperature in the heat treatment unit. The treatment objects are conveyed inside the heat treatment furnace by the conveyor, and are heat-treated while being conveyed therein.

### Summary

In a heat treatment furnace such as the one in Japanese Patent Application Publication No. 2009-103331, reactant gas may be generated from the treatment object while it is heat-treated inside the heat treatment unit. In order to suitably heat-treat the treatment object, the reactant gas generated from the treatment object should be purged and atmospheric gas should be supplied in a surrounding of the treatment object. If the atmospheric gas is supplied in a large volume into the heat treatment unit, the reactant gas can be purged from the surrounding of the treatment obj ect, and the atmospheric gas can be supplied to the surrounding of the treatment object. However, when such a large volume of atmospheric gas is supplied into the heat treatment unit, there has been a problem that a large quantity of energy is required to heat the supplied atmospheric gas to a desired heat treatment temperature.

The description herein discloses an art configured to efficiently supply atmospheric gas to a surrounding of a treatment object.

A heat treatment furnace disclosed herein may comprise: a heat treatment unit configured to heat-treat a treatment object; a conveyor provided in the heat treatment unit and configured to convey the treatment object from one end to another end of the heat treatment unit; a heater provided in the heat treatment unit and configured to adjust a temperature in the heat treatment unit; a supply flow path having a supply port unit configured to supply atmospheric gas into the heat treatment unit; an adjustment valve unit provided in the supply flow path and configured to adjust a supply volume of the atmospheric gas supplied from the supply port unit; and a control device configured to control the adjustment valve unit so that the supply volume from the supply port unit changes cyclically while the treatment object is conveyed from the one end to the other end of the heat treatment unit.

In the heat treatment furnace as above, a flow speed of the atmospheric gas supplied to the heat treatment unit changes by the cyclic change in the supply volume from the supply port unit. Due to this, a time period during which the flow speed of the atmospheric gas supplied into the heat treatment furnace is high can be secured without increasing the supply volume of the atmospheric gas to the heat treatment unit. Due to this, gas in the surrounding of the treatment object can easily be replaced with the atmospheric gas. Further, since the flow speed of the supplied atmospheric gas changes, the atmospheric gas inside the heat treatment unit can easily be stirred, and a temperature distribution inside the heat treatment unit can easily be uniformized.

In one aspect of the present disclosure, in the heat treatment furnace disclosed herein, the heat treatment furnace may comprise a plurality of supply devices arranged at intervals in a conveying direction of the treatment object. The supply port unit may comprise sets of supply ports, each set including a plurality of supply ports disposed along an orthogonal plane orthogonal to the conveying direction of the treatment object. Each supply device may comprise corresponding one of the sets of supply ports. The supply volume from each of the supply ports may be switched repeatedly and alternately between a first supply volume and a second supply volume smaller than the first supply volume. The control device may be configured to control the adjustment valve unit so that, for each supply device, the supply volumes from the corresponding set of supply ports change all at once. According to such a configuration, since the supply volumes from the set of supply ports provided in the same supply device are controlled simultaneously, the supply volumes of the supply ports in each supply device can easily be controlled.

In one aspect of the present disclosure, in the heat treatment furnace disclosed herein, the heat treatment furnace may comprise a plurality of supply devices arranged at intervals in a conveying direction of the treatment object. The supply port unit may comprise sets of supply ports, each set including a plurality of supply ports disposed along an orthogonal plane orthogonal to the conveying direction of the treatment object. Each supply device may comprise corresponding one of the sets of supply ports. The supply volume from each of the supply ports may be switched repeatedly and alternately between a first supply volume and a second supply volume smaller than the first supply volume. The control device may be configured to control the adjustment valve unit so that, for each supply device, when the supply volume from one supply port in the corresponding set of supply ports is the first supply volume, the supply volume from another supply port adjacent to the one supply port in the corresponding set of supply ports is the second supply volume, and when the supply volume from the other supply port is the first supply volume, the supply volume from the one supply port is the second supply volume. According to such a configuration, among the set of supply ports provided in the same supply device (that is, the set of supply ports disposed along the orthogonal plane orthogonal to the conveying direction), when one supply port is switched from the first supply volume to the second supply volume, the supply port adjacent to this supply port is switched from the second supply volume to the first supply volume. Due to this, in the orthogonal plane along which the atmospheric gas is supplied from each supply device, a state can be realized in which the flow speed from each supply port is increased while a change in a total supply volume of the atmospheric gas supplied to the heat treatment unit is reduced.

In one aspect of the present disclosure, in the heat treatment furnace disclosed herein, the heat treatment furnace may comprise a plurality of supply devices arranged at intervals in a conveying direction of the treatment object. The supply port unit may comprise sets of supply ports, each set including a plurality of supply ports disposed along an orthogonal plane orthogonal to the conveying direction of the treatment object. Each supply device may comprise corresponding one of the sets of supply ports. When viewed along the conveying direction, in each supply device, positions of the corresponding set of supply ports may be different from positions of the set of supply ports provided at the supply device adj acent to the each supply device. The supply volume from each supply port may be switched repeatedly and alternately between a first supply volume and a second supply volume smaller than the first supply volume. The control device may be configured to control the adjustment valve unit so that, for each supply device, the supply volumes from the corresponding set of supply ports change all at once. The control device may be configured to control the adjustment valve unit so that when the supply volume from the set of supply ports of one supply device of the plurality of supply devices is the first supply volume, the supply volume from the set of supply ports of another supply device adjacent to the one supply device is the second supply volume, and when the supply volume from the set of supply ports of the other supply device is the first supply volume, the supply volume from the set of supply ports of the one supply device is the second supply volume. According to such a configuration, when a given supply device is switched from the first supply volume to the second supply volume, the supply device adjacent to this supply device is switched from the second supply volume to the first supply volume. Due to this, the state can be realized in which the flow speed from each supply device is increased while the change in the total supply volume of the atmospheric gas supplied to the heat treatment unit is reduced.

In one aspect of the present disclosure, in the heat treatment furnace disclosed herein, the adjustment valve unit may comprise a plurality of adjustment valves. The set of supply ports of each supply device may be adjusted by corresponding one of the plurality of adjustment valves. According to such a configuration, number of the adjustment valves can be reduced. Further, the supply volumes from the respective supply ports provided in the same supply device can be uniformized, and the supply of the atmospheric gas to the heat treatment unit can more easily be adjusted.

In one aspect of the present disclosure, in the heat treatment furnace disclosed herein, the control device may be configured to control the adjustment valve unit so that, each time a treatment object passes through each orthogonal plane on which a corresponding set of supply ports is provided, the atmospheric gas is supplied at least once from the corresponding set of supply ports with the first supply volume. According to such a configuration, supply of the atmospheric gas can be ensured in the surrounding of the treatment object.

### Brief Description of Drawings

FIG. 1 shows a schematic configuration of a heat treatment furnace of a first embodiment, and is a vertical cross-sectional view obtained when the heat treatment furnace is cut along a plane parallel to a conveying direction of treatment objects.
FIG. 2 is a cross-sectional view along a line II-II in FIG. 1.
FIG. 3 is a block diagram showing a configuration of a control system of the heat treatment furnace of the embodiment.
FIGS. 4A and 4B show changes in a flow rate and a flow speed of atmospheric gas supplied from a supply port disposed between treatment objects in the first embodiment, where FIG. 4A shows the change in the flow rate and FIG. 4B shows the change in the flow speed.
FIG. 5 shows a schematic configuration of a heat treatment furnace of a second embodiment, and is a vertical cross-sectional view obtained when the heat treatment furnace is cut along a plane perpendicular to the conveying direction of treatment objects.
FIGS. 6A and 6B show changes in a flow rate and a flow speed of atmospheric gas supplied from supply ports in a third embodiment, where FIG. 6A shows a change in a total of the flow rate of the atmospheric gas supplied from the supply ports, and FIG. 6B shows the change in the flow speed of atmospheric gas supplied from a supply port disposed between treatment objects.
FIGS. 7A to 7C show changes in a flow rate and a flow speed of atmospheric gas supplied from supply ports in a fifth embodiment, where FIG. 7A shows the change in the flow rate of the atmospheric gas supplied from each supply port, FIG. 7B shows a change in a total of flow rates of the atmospheric gas supplied from first and second groups of supply devices, and FIG. 7C shows the flow speed of the atmospheric gas supplied from each supply port in the supply devices of FIG. 7B.
FIG. 8 shows a schematic configuration of a heat treatment furnace of a sixth embodiment, and is a vertical cross-sectional view obtained when the heat treatment furnace is cut along a plane perpendicular to the conveying direction of treatment objects.

### Embodiments

Some primary features of the embodiments described below will be listed. The technical elements listed below are respectively independent technical elements, each exhibiting technical usefulness alone or in various combinations, which are not limited to the combinations as recited in the originally filed claims.

### (First Embodiment)

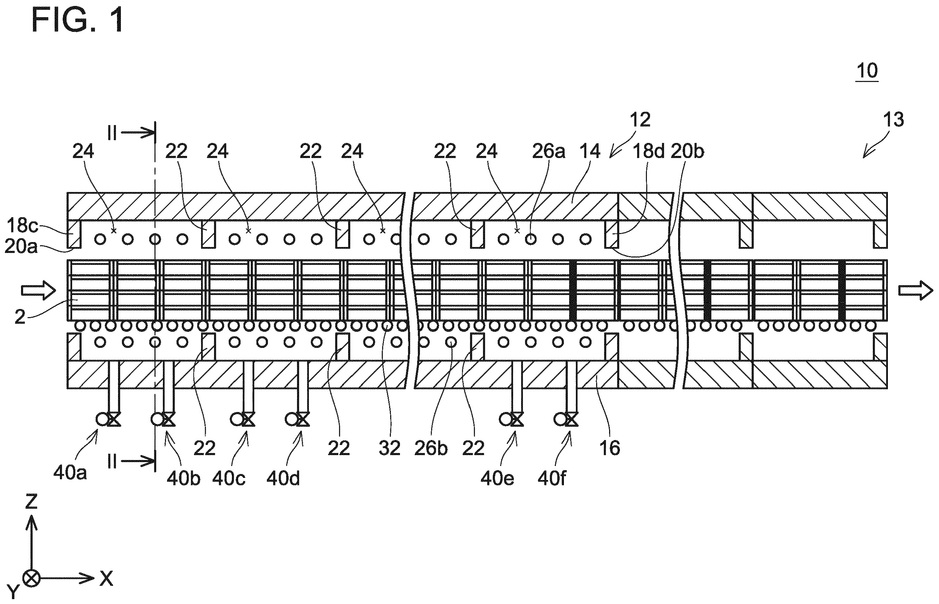

A heat treatment furnace 10 of the present embodiment will be described with reference to the drawings. As shown in FIGS. 1 to 3, the heat treatment furnace 10 includes a heat treatment unit 12, a conveyor 30, a plurality of supply devices 40, and a control device 60. The heat treatment furnace 10 is configured to heat-treat treatment objects 2 while the treatment objects 2 are conveyed within the heat treatment unit 12 by the conveyor 30.

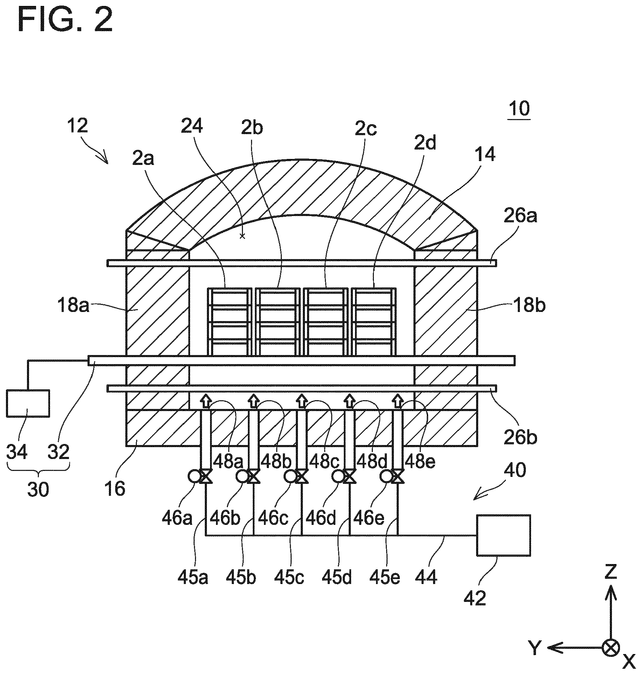

The treatment objects 2 each may be a positive electrode material or a negative electrode material of a lithium ion battery, for example. When the positive electrode material and/or the negative electrode material of the lithium ion battery are to be heat-treated by using the heat treatment furnace 10, these materials can be accommodated in box-shaped saggars and conveyed within the furnace in such a state. In the heat treatment furnace 10 of the present embodiment, multiple saggars may be stacked in an up-down direction on conveying rollers 32 (to be described later), and these saggars stacked in the up-down direction may be conveyed in a state of arranging such stacks in plurality along a direction (which is Y direction in FIG. 2) orthogonal to a conveying direction. As shown in FIG. 2, in the present embodiment, the saggars are placed on the conveying rollers 32 in a state of having four saggars stacked in the up-down direction and four stacks thereof arranged in the Y direction orthogonal to the conveying direction. Hereinbelow, in the present embodiment, an entirety of substance(s) to be subjected to heat treatment and the saggars accommodating the substance(s) to be subjected to the heat treatment will be termed "treatment objects 2". Further, in the description below, when the treatment objects 2 need to be distinguished, they may be described by adding an alphabetical suffix to the reference number such as treatment objects 2a, 2b, and the mere terminology of "treatment objects 2" may be used when such distinction is not necessary. Further, similarly for other constituent members, they may be described simply with their reference numbers without the alphabetical suffixes when such distinction among the same constituent members is not necessary. As shown in FIG. 2, in the present embodiment, the four stacks of treatment objects 2 arranged in the direction orthogonal to the conveying direction may be termed treatment objects 2a to 2d in an order from a +Y side toward a -Y side.

The heat treatment unit 12 is a substantially rectangular box-shaped space, and is defined by a ceiling wall 14, a bottom wall 16, and side walls 18a to 18d. The ceiling wall 14 is disposed parallel to the bottom wall 16 (that is, parallel to a XY plane). As shown in FIG. 2, the side walls 18a, 18b are disposed parallel to the conveying direction and vertical to the ceiling wall 14 and the bottom wall 16 (that is, parallel to a XZ plane). As shown in FIG. 1, the side wall 18c is disposed at an entrance end of a conveying path and vertical to the conveying direction (that is, parallel to a YZ plane). The side wall 18d is disposed at an exit end of the conveying path and parallel to the side wall 18c (that is, parallel to the YZ plane). An opening 20a is defined in the side wall 18c, and an opening 20b communicated with a cooling unit 13 is defined in the side wall 18d. The treatment objects 2 are conveyed by the conveyor 30 into the heat treatment furnace 10 through the opening 20a and conveyed to the cooling unit 13 through the opening 20b. That is, the opening 20a is used as an entrance, and the opening 20b is used as an exit from the heat treatment unit and for entering into the cooling unit 13.

Further, the heat treatment unit 12 has partition walls 22 disposed therein. The heat treatment unit 12 is partitioned into a plurality of spaces 24 by the partition walls 22. Each space 24 is configured capable of maintaining an atmospheric temperature that is different from those of its adjacent spaces 24 by being closed off from its adjacent spaces 24 by the partition wall(s) 22. Each space 24 has pluralities of heaters 26a, 26b and the plurality of conveying rollers 32 (to be described later) disposed therein. The heaters 26a are disposed at predetermined intervals in the conveying direction each at a position above the conveying rollers 32, and the heaters 26b are disposed at predetermined intervals in the conveying direction each at a position below the conveying rollers 32. Each space 24 is heated when the corresponding heaters 26a, 26b generate heat.

The conveyor 30 includes the plurality of conveying rollers 32 and a driving device 34. The conveyor 30 is configured to convey the treatment objects 2 from the opening 20a into the heat treatment unit 12, and conveys the treatment objects 2 through the respective spaces 24. Further, the conveyor 30 is configured to convey the treatment objects 2 out of the heat treatment unit 12 from the opening 20b. The treatment objects 2 are conveyed by the conveying rollers 32.

The conveying rollers 32 are cylindrical, and their axial lines extend in the direction orthogonal to the conveying direction (that is, in the Y direction). The conveying rollers 32 all have a substantially same diameter, and are arranged at regular intervals at a certain pitch. The conveying rollers 32 are each rotatably supported about the axial line, and are configured to rotate when driving force from the driving device 34 is transmitted.

The driving device 34 is a driving device (such as a motor) configured to drive the conveying rollers 32. The driving device 34 is connected to the conveying rollers 32 via a power transmission mechanism. The conveying rollers 32 are configured to rotate when the driving force of the driving device 34 is transmitted to the conveying rollers 32 via the power transmission mechanism. A known configuration may be used as the power transmission mechanism, and a mechanism using sprockets and chains may be used. The driving device 34 is configured to drive each of the conveying rollers 32 such that the conveying rollers 32 rotate at a substantially same speed. The driving device 34 is controlled by the control device 60.

The supply devices 40 are each disposed along an orthogonal plane orthogonal to the conveying direction of the treatment objects 2. As shown in FIG. 1, the heat treatment unit 12 includes the plurality of supply devices 40, and these supply devices 40 are disposed with intervals between each other in the conveying direction of the treatment objects 2 (X direction). As shown in FIG. 2, each supply device 40 includes a gas supply source 42, a supply flow path 44, and a plurality of adjustment valves 46a to 46e.

Each supply flow path 44 is configured to supply atmospheric gas from the gas supply source 42 to its corresponding space 24 in the heat treatment unit 12 through the adjustment valves 46. Specifically, the supply flow path 44 has its one end connected to the gas supply source 42, and branched paths 45a to 45e that branch into a plurality is arranged at its other end. In the present embodiment, each supply flow path 44 branches into five branched paths 45a to 45e. The adjustment valves 46a to 46e are respectively disposed on their corresponding branched paths 45a to 45e, and other ends of the branched paths 45a to 45e beyond the adjustment valves 46a to 46e are disposed within the bottom wall 16. A set of supply ports 48a to 48e that communicates with their corresponding space 24 is provided at the other ends of the branched paths 45a to 45e. The atmospheric gas in the gas supply source 42 flows through the supply flow path 44 and distributed to the respective branched paths 45a to 45e, and is further supplied into the space 24 from the respective supply ports 48a to 48e.

The respective supply ports 48a to 48e in each set are disposed so as to be positioned between the treatment objects 2 arranged along the Y direction orthogonal to the conveying direction, between the side wall 18a and the treatment object 2, and between the side wall 18b and the treatment object 2 when the treatment objects 2 are placed on the conveying rollers 32. Specifically, the supply port 48a is disposed between the side wall 18a and a position where the treatment object 2a is placed, the supply port 48b is disposed between the position where the treatment object 2a is placed and a position where the treatment object 2b is placed, the supply port 48c is disposed between the position where the treatment object 2b is placed and a position where the treatment object 2c is placed, the supply port 48d is disposed between the position where the treatment object 2c is placed and a position where the treatment object 2d is placed, and the supply port 48e is disposed between the position where the treatment object 2d is placed and the side wall 18b. By disposing the respective supply ports 48a to 48e as above, the atmospheric gas supplied from the respective supply ports 48a to 48e is blown into clearances between the treatment objects 2 arranged along the direction orthogonal to the conveying direction, between the side wall 18a and the treatment objects 2, and between the side wall 18b and the treatment objects 2 when the treatment objects 2 are conveyed inside the heat treatment unit 12.

The treatment objects 2 (specifically, the substances accommodated in the saggars) may generate gas (hereinbelow termed reactant gas) by being heated in heat treatment. If the reactant gas generated from the treatment objects 2 remains near the treatment objects 2, the treatment objects 2 cannot be brought into contact with the atmospheric gas supplied from the gas supply sources 42. Due to this, in order to place the treatment objects 2 within the atmospheric gas supplied from the gas supply sources 42, the reactant gas generated from the treatment objects 2 needs to be purged. By blowing the atmospheric gas from the respective supply ports 48a to 48e in each set into the clearances between the treatment objects 2 arranged along the Y direction orthogonal to the conveying direction, between the side wall 18a and the treatment objects 2, and between the side wall 18b and the treatment objects 2, the supplied atmospheric gas flows by side surfaces of the treatment objects 2 (especially opposed side surfaces of the treatment objects 2 placed adjacently on the conveying rollers 32), and the reactant gas generated from the treatment objects 2 can easily be purged. A set of exhaust ports including a plurality of exhaust ports (not shown) is defined in the ceiling wall 14, and the atmospheric gas (including the reactant gas) is configured to be discharged from the respective spaces 24 through these exhaust ports.

The adjustment valves 46a to 46e are each disposed on their corresponding one of the branched paths 45a to 45e. The adjustment valves 46a to 46e are connected to the control device 60, and their opening degrees are adjusted by the control device 60. With the opening degrees of the adjustment valves 46a to 46e being adjusted, a flow rate of the atmospheric gas supplied from each of the supply ports 48a to 48e is adjusted.

As aforementioned, the supply ports 48a to 48e are respectively disposed so as to blow the atmospheric gas into the clearances between the treatment objects 2 arranged along the Y direction orthogonal to the conveying direction, between the side wall 18a and the treatment objects 2, and between the side wall 18b and the treatment objects 2. In order to improve productivity, a width of the clearances between the treatment objects 2 arranged adjacently in the Y direction orthogonal to the conveying direction is set narrow, and as shown in FIG. 2, this width is narrower than a width of the clearance between the side wall 18a and the treatment objects 2, and a width of the clearance between the side wall 18b and the treatment objects 2. Due to this, the respective adjustment valves 46a to 46e are adjusted such that the flow rate of the atmospheric gas from each of the supply ports 48b to 48d disposed so as to blow the atmospheric gas into the clearances between the treatment objects 2 arranged along the direction orthogonal to the conveying direction becomes greater than the flow rate of the atmospheric gas from each of the supply ports 48a, 48e disposed to blow the atmospheric gas into the clearances between the side wall 18a and the treatment objects 2 and between the side wall 18b and the treatment objects 2. In the present embodiment, the respective adjustment valves 46a to 46e are adjusted such that the flow rate of the atmospheric gas from each of the supply ports 48b to 48d becomes substantially twice the flow rate of the atmospheric gas from each of the supply ports 48a, 48e.

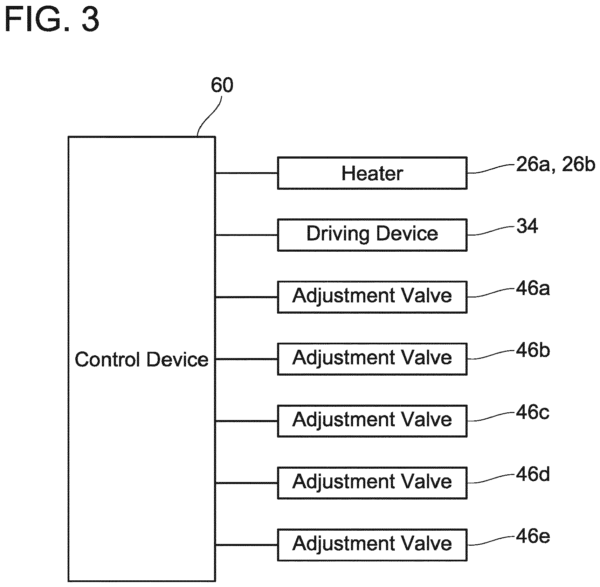

The control device 60 is configured for example by a computer provided with a CPU, a ROM, and a RAM As shown in FIG. 3, the control device 60 is connected to the heaters 26a, 26b, the driving device 34, and the adjustment valves 46a to 46e, and controls the heaters 26a, 26b, the driving device 34, and the adjustment valves 46a to 46e. That is, the control device 60 controls the atmospheric temperatures of the respective spaces 24 by controlling the heaters 26a, 26b. The control device 60 controls a conveying speed of the treatment objects 2 conveyed inside the heat treatment unit 12 by controlling the driving device 34. The control device 60 controls the flow rates of the atmospheric gas from the respective supply ports 48a to 48e in each set by controlling the adjustment valves 46a to 46e.

Control of the adjustment valves 46a to 46e executed by the control device 60 will be described in further detail. The control device 60 cyclically changes the opening degree of each of the adjustment valves 46a to 46e while the treatment objects 2 are conveyed within the heat treatment unit 12. Specifically, a first state in which the adjustment valves 46a to 46e are adjusted such that the flow rate of the atmospheric gas supplied from the respective supply ports 48a to 48e is a first supply volume for a first period of time, and a second state in which the adjustment valves 46a to 46e are adjusted such that the flow rate of the atmospheric gas supplied from the respective supply ports 48a to 48e is a second supply volume for a second period of time are alternately repeated.

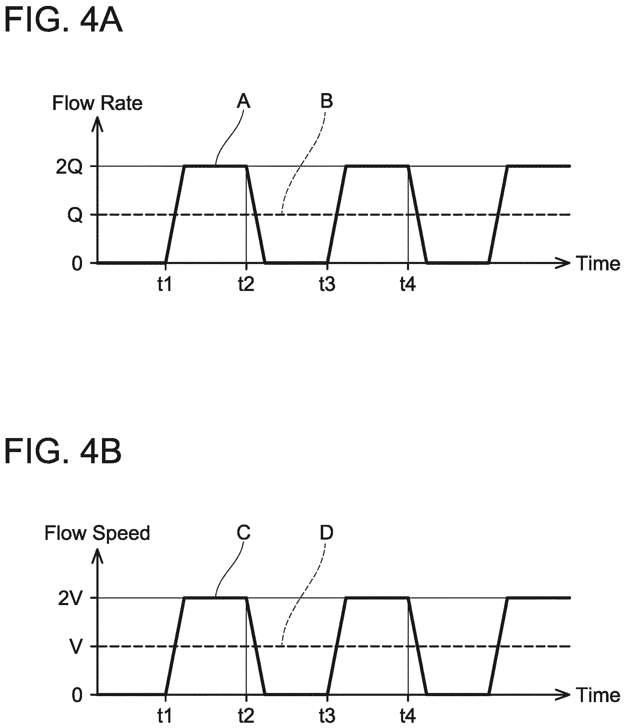

As shown in FIG. 4A, in the present embodiment, a state in which the respective adjustment valves 46a to 46e are opened and a state in which they are closed are repeated. FIG. 4A shows a change in the flow rate of the atmospheric gas supplied from each of the supply ports 48b, 48c, 48d. A change in the flow rate of the atmospheric gas supplied from each of the supply ports 48a, 48e is omitted from the drawing. In FIG. 4A, time periods 0 to t1, t1 to t2, t2 to t3, and t3 to t4 have a same duration length. As shown in a graph A, in the present embodiment, the adjustment valves 46b, 46c, 46d are closed and the flow rate of the atmospheric gas supplied from each of the supply ports 48b, 48c, 48d is 0 until time t1. When time t1 arrives, the adjustment valves 46b, 46c, 46d are opened, by which the flow rate of the atmospheric gas supplied from each of the supply ports 48b, 48c, 48d becomes 2Q. This state is maintained until time t2, and when time t2 arrives, the adjustment valves 46b, 46c, 46d are closed again and the flow rate of the atmospheric gas supplied from each of the supply ports 48b, 48c, 48d becomes 0. Then, when time t3 arrives, the adjustment valves 46b, 46c, 46d are opened, and the flow rate of the atmospheric gas supplied from each of the supply ports 48b, 48c, 48d again becomes 2Q. As above, the adjustment valves 46b, 46c, 46d are controlled such that the flow rate of the atmospheric gas supplied from each of the supply ports 48b, 48c, 48d repeats a state of being 2Q (first state) and a state of being 0 (second state).

As aforementioned, the flow rate of the atmospheric gas supplied from each of the supply ports 48a, 48e is half the flow rate of the atmospheric gas supplied from each of the supply ports 48b to 48d. Due to this, the opening degrees of the adjustment valves 46a, 46e are controlled such that the flow rate of the atmospheric gas supplied from each of the supply ports 48a, 48e is Q in the first state. The adjustment valves 46a, 46e are controlled such that the flow rate of the atmospheric gas supplied from each of the supply ports 48a, 48e is repeated to be in the first state (state of being Q) and the second state (state of being 0) at same timings as the flow rate of the atmospheric gas supplied from each of the supply ports 48b to 48d.

Further, the control device 60 controls a duration length (time) of the first state and a duration length (time) of the second state such that the first state (state in which the atmospheric gas is blown out from the supply ports 48a to 48e) takes place at least once each time the treatment objects 2 are conveyed through each range where the corresponding set of supply ports 48a to 48e belonging to the same supply device 40 (disposed on a same orthogonal plane) are disposed. Due to this, the supply devices 40 can each blow the atmospheric gas to a surrounding of the side surfaces of the treatment objects 2 at least once each time the treatment objects 2 are conveyed through each orthogonal plane in which the corresponding supply device 40 is disposed.

For example, in a case where the control device 60 does not change the opening degrees of the respective adjustment valves 46a to 46e while the treatment objects 2 are conveyed through the heat treatment unit 12 (hereinbelow may be termed a case of a comparative example), the flow rates of the atmospheric gas supplied from the respective supply ports 48a to 48e become constant at all times. In an example shown in FIG. 4A, as shown in a graph B, the flow rate of the atmospheric gas supplied from each of the supply ports 48b to 48d is Q, and although omitted from the drawing, the flow rate of the atmospheric gas supplied from each of the supply ports 48a, 48e is 0.5Q. In this case, a total of the flow rates of the atmospheric gas supplied simultaneously from the supply ports 48a to 48e becomes 4Q (= 0.5Q+Q+Q+Q+0.5Q).

On the other hand, in the present embodiment, in the first state in which the atmospheric gas is supplied from the respective supply ports 48a to 48e, the total of the flow rates of the atmospheric gas supplied simultaneously from the supply ports 48a to 48e becomes 8Q (= Q+2Q+2Q+2Q+Q) (see graph A). Due to this, the atmospheric gas is supplied from the supply ports 48a to 48e in the total of 8Q in the first state (for example, during the period t1 to t2), while the atmospheric gas is not supplied in the second state (for example, during the period t2 to t3). Since the control device 60 controls the opening degrees of the respective adjustment valves 46a to 46e so as to alternately repeat the first state and the second state, a time during which the atmospheric gas is supplied from the respective supply ports 48a to 48e while the treatment objects 2 are conveyed through the heat treatment unit 12 becomes half of a time in the case of the comparative example. Thus, even if a total of the flow rates of the atmospheric gas supplied simultaneously from the respective supply ports 48a to 48e in the first state is doubled from that of the case of the comparative example, a supply volume of the atmospheric gas supplied into the heat treatment unit 12 during the heat treatment can be set to a same volume as that in the case of the comparative example.

In the present embodiment, since the flow rates of the atmospheric gas supplied from the respective supply ports 48a to 48e in the first state are twice the case of the comparative example, the flow speeds of the atmospheric gas supplied from the respective supply ports 48a to 48e in the first state can also be doubled from that of the case of the comparative example. FIG. 4B shows a change in a flow speed of the atmospheric gas supplied from each of the supply ports 48b to 48d. Although omitted from the drawing, a flow speed of each of the supply ports 48a, 48e is half the flow speed in a graph shown in FIG. 4B. As shown in FIG. 4B, the flow speed of each of the supply ports 48b to 48d in the present embodiment as shown by a graph C is 2V in the first state (for example, during the period t1 to t2) while 0 in the second state (for example, during the period t2 to t3), and these states are repeated. On the other hand, in the comparative example shown by a graph D, a flow speed therein is V at all times. That is, the flow speed in the case of the comparative example becomes half the flow speed 2V in the first state in the present embodiment. This is because the flow rate in the case of the comparative example is Q, which is half the flow rate 2Q in the first state of the present embodiment.

As above, in the present embodiment, while the treatment objects 2 are conveyed through the heat treatment unit 12, the flow speed of the atmospheric gas supplied from each of the supply ports 48a to 48e can be increased by the control device 60 cyclically changing the opening degrees of the adjustment valves 46a to 46e without increasing the supply volume of the atmospheric gas supplied into the heat treatment unit 12 during the heat treatment. Due to this, the speeds of the atmospheric gas passing by the side surfaces of the treatment objects 2 are increased, by which the reactant gas generated from the treatment objects 2 can more easily be purged. Further, since the flow speeds of the atmospheric gas supplied from the respective supply ports 48a to 48e change cyclically, the atmospheric gas in the spaces 24 in the heat treatment unit 12 is more easily stirred. Due to this, a temperature distribution in each space 24 can more easily be uniformized.

In the present embodiment, the atmospheric gas is supplied from the respective supply ports 48a to 48e in the first state while supply of the atmospheric gas from the respective supply ports 48a to 48e is stopped in the second state, however, no limitation is made to this configuration. For example, the atmospheric gas may be supplied from the respective supply ports 48a to 48e in both the first and second states. That is, the control device 60 may control the opening degrees of the respective adjustment valves 46a to 46e such that a supply volume of the atmospheric gas from each of the supply ports 48a to 48e in the second state is at a volume different from the supply volume of the atmospheric gas from each of the supply ports 48a to 48e in the first state.

Further, in the present embodiment, the treatment objects 2 are placed on the conveying rollers 32 in the state of having four stacked in the up-down direction and four stacks thereof arranged in the direction orthogonal to the conveying direction, however, no limitation is made to this configuration. In placing the treatment objects 2 on the conveying rollers 32, number of the treatment objects 2 arranged in the direction orthogonal to the conveying direction is not limited, and such may be more than four or less than four. In this case, the branched paths 45 may be provided corresponding to the number of the treatment objects 2 arranged in the direction orthogonal to the conveying direction, and the respective supply ports 48 at the other ends of the branched paths 45 may be disposed to correspond to the clearances between the treatment objects 2 arranged along the direction orthogonal to the conveying direction, between the side wall 18a and the treatment objects 2, and between the side wall 18b and the treatment objects 2. Further, in placing the treatment objects 2 on the conveying rollers 32, number of the treatment objects 2 to be stacked in the up-down direction is also not limited, and this may be more than four or less than four.

### (Second Embodiment)

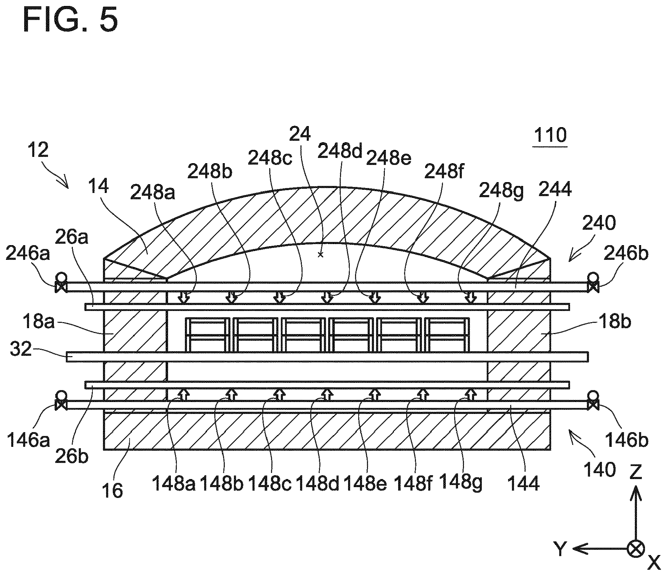

In the first embodiment as above, the adjustment valves 46a to 46e are provided respectively in the corresponding branched paths 45a to 45e, however, no limitation is made to this configuration. For example, as shown in FIG. 5, a supply volume of a set of supply ports 148 and a set of supply ports 248 provided respectively within the same supply devices 140 and 240 (within each of the supply devices 140, 240 disposed along the same orthogonal plane orthogonal to the conveying direction of the treatment objects 2) may each be adjusted by corresponding ones of same adjustment valves 146 and 246. In the present embodiment, configurations of the supply devices 140, 240 differ from the configuration of the supply devices 40 of the first embodiment, and other configurations are substantially same. Thus, descriptions will be omitted for the configurations that are same as those of the heat treatment furnace 10 of the first embodiment. Further, in the present embodiment, the configurations of the supply devices 140, 240 will be described by exemplifying a case in which two treatment objects 2 are stacked in the up-down direction and six stacks thereof are arranged in the direction orthogonal to the conveying direction.

As shown in FIG. 5, a heat treatment furnace 110 of the present embodiment includes two supply devices 140, 240 along the same orthogonal plane orthogonal to the conveying direction of the treatment objects 2. Further, although omitted from the drawing, a plurality of supply devices 140 and a plurality of supply devices 240 are disposed in the heat treatment unit 12 in the present embodiment similar to the first embodiment as above, and these pluralities of supply devices 140, 240 are disposed at regular intervals in the conveying direction of the treatment objects 2 (X direction).

Each of the supply devices 140 includes gas supply source(s) 42 (not shown), a supply flow path 144, and two adjustment valves 146a, 146b. The supply flow path 144 is configured to supply atmospheric gas from the gas supply source(s) 42 to its corresponding space 24 in the heat treatment unit 12 through the adjustment valves 146a, 146b. The supply flow path 144 has its both ends disposed outside the heat treatment unit 12, and a portion between these ends is disposed inside its corresponding space 24 by penetrating through side walls 18a, 18b. Specifically, the supply flow path 144 penetrates the side walls 18a, 18b near a bottom wall 16, and is disposed in the space 24 along an inner surface of the bottom wall 16 while being substantially parallel to conveying rollers 32.

A set of supply ports including supply ports 148a to 148g is defined in an upper surface of the portion of the supply flow path 144 disposed inside the space 24. The atmospheric gas in the supply flow path 144 is configured to be discharged upward from the respective supply ports 148a to 148g. The respective supply ports 148a to 148g are provided so as to correspond to the clearances between the treatment objects 2 arranged along the direction orthogonal to the conveying direction, between the side wall 18a and the treatment objects 2, and between the side wall 18b and the treatment objects 2 when the treatment objects 2 are placed on the conveying rollers 32. In the present embodiment, since the treatment objects 2 are placed on the conveying rollers 32 in a state of having six of them arranged in the direction orthogonal to the conveying direction, the supply flow path 144 is provided with seven supply ports 148a to 148g. When the treatment objects 2 are conveyed through the heat treatment unit 12, the atmospheric gas supplied from the respective supply ports 148a to 148g is blown into the clearances between the treatment objects 2 arranged along the direction orthogonal to the conveying direction, between the side wall 18a and the treatment objects 2, and between the side wall 18b and the treatment objects 2.

The adjustment valves 146a, 146b are provided at portions of the supply flow path 144 that are disposed outside the heat treatment unit 12. Specifically, the adjustment valve 146a is provided at the portion of the supply flow path 144 disposed outside the heat treatment unit 12 on the +Y side, and the adjustment valve 146b is provided at the portion of the supply flow path 144 disposed outside the heat treatment unit 12 on the -Y side. Each of the ends of the supply flow path 144 is connected to the gas supply source(s) 42 (not shown) via its corresponding one of the adjustment valves 146a, 146b. That is, the atmospheric gas supplied from the gas supply source(s) 42 is supplied to each of those ends of the supply flow path 144. Opening areas of the respective supply ports 148a to 148g are adjusted such that the atmospheric gas is supplied from the respective supply ports 148a to 148g at a substantially same flow rate. In the present embodiment as well, the opening areas of the supply ports 148b to 148f may be set large as compared to the supply ports 148a, 148g such that the flow rate of the atmospheric gas supplied from the supply ports 148b to 148f is greater than the flow rate of the supply ports 148a, 148g. The adjustment valves 146a, 146b are controlled by the control device 60 such that their opening degrees change simultaneously. In the present embodiment as well, the control device 60 cyclically changes the opening degrees of the adjustment valves 146a, 146b while the treatment objects 2 are conveyed through the heat treatment unit 12. Specifically, the adjustment valves 146a, 146b are controlled such that the flow rates of the respective supply ports 148a to 148g repeat the first state (state in which the atmospheric gas is supplied) and the second state (state in which the atmospheric gas is not supplied).

Each of the supply devices 240 includes the gas supply source(s) 42 (not shown), a supply flow path 244, and two adjustment valves 246a, 246b. The supply flow path 244 is configured to supply the atmospheric gas from the gas supply source 42 to its corresponding space 24 in the heat treatment unit 12 through the adjustment valves 246a, 246b. The supply flow path 244 penetrates the side walls 18a, 18b near the ceiling wall 14, and is disposed in the space 24 along an inner surface of the ceiling wall 14 while being substantially parallel to the conveying rollers 32. Both ends of the supply flow path 244 are disposed outside the heat treatment unit 12, and the adjustment valves 246a, 246b are provided at portions thereof disposed outside the heat treatment unit 12. A set of supply ports including a plurality of (seven in the present embodiment) supply ports 248a to 248g is provided on a lower surface of a portion of the supply flow path 244 disposed inside the space 24. The atmospheric gas in the supply flow path 244 is configured to be discharged downward from the respective supply ports 248a to 248g. The respective supply ports 248a to 248g are provided so as to correspond to the clearances between the treatment objects 2 arranged along the direction orthogonal to the conveying direction, between the side wall 18a and the treatment objects 2, and between the side wall 18b and the treatment objects 2 when the treatment objects 2 are placed on the conveying rollers 32. Degrees of opening of the adjustment valves 246a, 246b are controlled to change simultaneously as the opening degrees of the adjustment valves 146a, 146b. As such, while the treatment objects 2 are conveyed through the heat treatment unit 12, the opening degrees of the adjustment valves 146a, 146b of each supply device 140 and the opening degrees of the adjustment valves 246a, 246b of the corresponding supply device 240 change simultaneously.

In the present embodiment as well, the flow rates of the atmospheric gas supplied from the respective supply ports 148a to 148g and the respective supply ports 248a to 248g in the first state can be increased as compared to the case of the comparative example (being the case of not changing the opening degrees of the adjustment valves 146a, 146b and the adjustment valves 246a, 246b), by which the flow speeds of the atmospheric gas supplied from the respective supply ports 148a to 148g and the respective supply ports 248a to 248g can be increased. Due to this, the reactant gas generated from the treatment objects 2 can easily be purged. Further, in the present embodiment, in seeing the heat treatment unit 12 along the conveying direction, the atmospheric gas is supplied from left and right sides of the supply flow paths 144, 244. Due to this, left-right balance (in the Y direction) of the atmospheric gas supplied by each of the supply devices 140, 240 can be suppressed from being off-balanced within the device itself, and the atmospheric gas can be supplied uniformly into the heat treatment unit 12.

In the present embodiment, two supply devices 140, 240 are provided, however, no limitation is made to this configuration. Only one of the two supply devices 140, 240 may be provided. In the present embodiment, two adjustment valves 146a, 146b and 246a, 246b are arranged for each set of supply ports 148, 248, however, no limitation is made to this configuration. One adjustment valve or more than two adjustment valves may be arranged for each set of supply ports 148, 248.

### (Third Embodiment)

In the first and second embodiments as above, the flow rates of the atmospheric gas supplied from each of the sets of supply ports 48, 148, 248 provided in the same supply device 40, 140, 240 change simultaneously (all at once), however, no limitation is made to this configuration. For example, the control device 60 may control the respective adjustment valves 46 such that the flow rates of the atmospheric gas supplied from the set of supply ports 48 provided in a single supply device 40 change at different timings.

This will be described with the heat treatment furnace 10 shown in FIG. 2 as an example. In the present embodiment, the supply ports 48a to 48e in each set are grouped in a group of the supply ports 48a, 48c, 48e (hereinbelow may be termed a first group) and a group of the supply ports 48b, 48d (hereinbelow may be termed a second group). The control device 60 controls the sets of the adjustment valves 46a to 46e such that the flow rates of the atmospheric gas supplied from the supply ports 48a, 48c, 48e grouped as the first group all change simultaneously, and the flow rates of the atmospheric gas supplied from the supply ports 48b, 48d grouped as the second group all change simultaneously. Further, the control device 60 controls the adjustment valves 46a to 46e such that the flow rates of the atmospheric gas supplied from the supply ports 48a, 48c, 48e grouped as the first group become different from the flow rates of the atmospheric gas supplied from the supply ports 48b, 48d grouped as the second group.

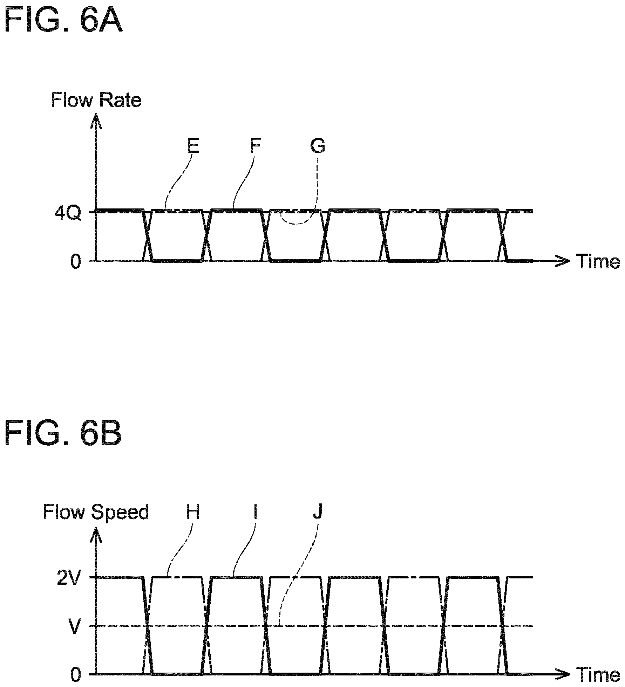

Specifically, the flow rates of the atmospheric gas supplied from the supply ports 48a, 48c, 48e grouped as the first group change equally to the flow rates of the atmospheric gas supplied from the supply ports 48a, 48c, 48e in the first embodiment. That is, the first state and the second state are alternately repeated, and in the first state, the flow rate of the atmospheric gas supplied from each of the supply ports 48a, 48e becomes Q, while the flow rate of the atmospheric gas supplied from the supply port 48c becomes 2Q. Due to this, in the first state, the total of the flow rates of the atmospheric gas supplied from the supply ports 48a, 48c, 48e grouped as the first group becomes 4Q (= Q+2Q+Q), and changes as shown in a graph E of FIG. 6A.

The flow rates of the atmospheric gas supplied from the supply ports 48b, 48d grouped as the second group also change so as to alternately repeat the first state and the second state, however, a timing of shifting to the first state and a timing shifting to the second state are different from those of the flow rates of the atmospheric gas supplied from the supply ports 48a, 48c, 48e grouped as the first group. Specifically, the flow rates of the atmospheric gas supplied from the supply ports 48b, 48d grouped as the second group shift to the second state when the flow rates of the atmospheric gas supplied from the supply ports 48a, 48c, 48e grouped as the first group shift to the first state, and the flow rates of the atmospheric gas supplied from the supply ports 48b, 48d grouped as the second group shift to the first state when the flow rates of the atmospheric gas supplied from the supply ports 48a, 48c, 48e grouped as the first group shift to the second state. Since the flow rates of the atmospheric gas supplied from the supply ports 48b, 48d in the first state are each 2Q, the total of the flow rates of the atmospheric gas supplied from the supply ports 48b, 48d grouped as the second group in the first state becomes 4Q (= 2Q+2Q), and changes as shown in a graph F of FIG. 6A.

Thus, in the present embodiment, as shown in the graphs E, F of FIG. 6A, the total of the flow rates of the atmospheric gas supplied simultaneously from the supply ports 48a to 48e in the first state is substantially constant (4Q). As described in the first embodiment as above, the total of the flow rates of the atmospheric gas supplied simultaneously from the supply ports 48a to 48e in the case of the comparative example (case of not changing the opening degrees of the adjustment valves 146a, 146b and the adjustment valves 246a, 246b) is 4Q (= 0.5Q+Q+Q+Q+0.5Q). Due to this, in the present embodiment as well, the supply volume of the atmospheric gas supplied into the heat treatment unit 12 during the heat treatment does not increase.

On the other hand, in the first state, since the total of the flow rates of the atmospheric gas supplied from the supply ports 48a to 48e in each set (specifically, alternately between the first group and the second group) is twice the case of the comparative example, the flow speeds of the atmospheric gas supplied from the respective supply ports 48a, 48c, 48e grouped as the first group (see a graph H of FIG. 6B) as well as flow speeds of the atmospheric gas supplied from the respective supply ports 48b, 48d grouped as the second group (see a graph I of FIG. 6B) are also 2V, which is twice the flow speed V of the case of the comparative example (see a graph J of FIG. 6B). Due to this, in the present embodiment as well, the flow speeds of the atmospheric gas supplied from the respective supply ports 48a to 48e can be increased without increasing the supply volume of the atmospheric gas supplied into the heat treatment unit 12 during the heat treatment.

Further, in the present embodiment, in the first state, the atmospheric gas is supplied from either the supply ports 48a, 48c, 48e grouped as the first group or the supply ports 48b, 48d grouped as the second group, thus a situation in which no atmospheric gas is supplied from any of the supply ports 48a to 48e provided in each supply device 40 hardly occurs. When the atmospheric gas supplied into the spaces 24 of the heat treatment unit 12 is stopped, the atmospheric gas can easily move to and from the adjacent spaces 24. In the present embodiment, since the atmospheric gas is supplied at all times from any (i.e. one or more) of the supply ports 48a to 48e, movement of the atmospheric gas to and from the adjacent spaces 24 can be designed to be reduced or suppressed.

### (Fourth Embodiment)

In the third embodiment as above, the respective adjustment valves 46 are controlled such that the flow rates of the atmospheric gas supplied from the plurality of supply ports 48 within the same set provided in a single supply device 40 change at different timings from one another, however, no limitation is made to this configuration. For example, the control device 60 may control the respective adjustment valves 46 such that the flow rates of the supplied atmospheric gas in the supply devices 40 disposed adjacent to one another with an interval between them along the conveying direction of the treatment objects 2 (X direction) change at different timings.

Description will be given with reference to FIG. 1. FIG. 1 shows the heat treatment furnace 10 of the first embodiment, however, in the present embodiment, similar control may be executed with the supply devices 140, 240 provided in the heat treatment furnace 110 of the second embodiment, and further similar control may be executed also for only one of the supply devices 140, 240. Hereinbelow, the description will be given with the supply devices 40 provided in the heat treatment furnace 10 of the first embodiment as an example.

The heat treatment unit 12 has the plurality of supply devices 40 disposed along the conveying direction of the treatment objects 2 (X direction) with intervals between them. In the present embodiment, the plurality of supply devices 40 is grouped into two groups so that adjacent supply devices 40 are grouped in different groups. For example, the supply device 40a disposed on an uppermost stream side of the conveying direction is grouped as a first group, the supply device 40b disposed adjacent to the supply device 40a is grouped as a second group, and the supply device 40c disposed adjacent to the supply device 40b is grouped as the first group. Thus, the plurality of supply devices 40 disposed in the heat treatment unit 12 is grouped into the first and second groups. Further, two or more supply devices 40 are disposed in each space 24, and each space 24 is configured to have both the supply device(s) 40 grouped as the first group and the supply device(s) 40 grouped as the second group. The control device 60 controls the adjustment valves 46 such that flow rates of the atmospheric gas supplied from each set of the supply ports 48 of the supply device(s) 40 grouped as the first group and flow rates of the atmospheric gas supplied from each set of the supply ports 48 of the supply device(s) 40 grouped as the second group change at different timings. In the present embodiment, the control device 60 controls the respective adjustment valves 46 such that the flow rates of the atmospheric gas supplied from each set of the supply ports 48 of the supply device(s) 40 grouped as the first group change similar to the flow rates of the atmospheric gas supplied from each of the supply ports 48a, 48c, 48e grouped as the first group in the third embodiment as above, and the flow rates of the atmospheric gas supplied from each set of the supply ports 48 of the supply device(s) 40 grouped as the second group change similar to the flow rates of the atmospheric gas supplied from each of the supply ports 48b, 48d grouped as the second group in the third embodiment as above.

In the present embodiment as well, a total of the flow rates of the atmospheric gas supplied from the respective supply ports 48 of a single supply device 40 grouped as the first group as well as a total of the flow rates of the atmospheric gas supplied from the respective supply ports 48 of a single supply device 40 grouped as the second group both become the same volume as in the case of the comparative example (case of not changing the opening degrees of the adjustment valves 146a, 146b and the adjustment valves 246a, 246b). Contrary to this, the flow speed of the atmospheric gas supplied from each of the supply ports 48 is doubled from that of the case of the comparative example. Due to this, the flow speeds of the atmospheric gas supplied from the respective supply ports 48 can be increased without increasing the supply volume of the atmospheric gas supplied into the heat treatment unit 12 during the heat treatment. Further, in the present embodiment as well, since the atmospheric gas is supplied at all times from any (one or more) of the plurality of supply devices 40, the movement of the atmospheric gas to and from the adjacent spaces 24 can be designed to be reduced or suppressed.

### (Fifth Embodiment)

In the first to fourth embodiments as above, the first and second states are given a same time length (duration), however, no limitation is made to this configuration. For example, the time length of the first state supplying the atmospheric gas may be shorter than or longer than the second state in which the supply of the atmospheric gas is stopped (or having a less supply volume of the atmospheric gas than in the first state).

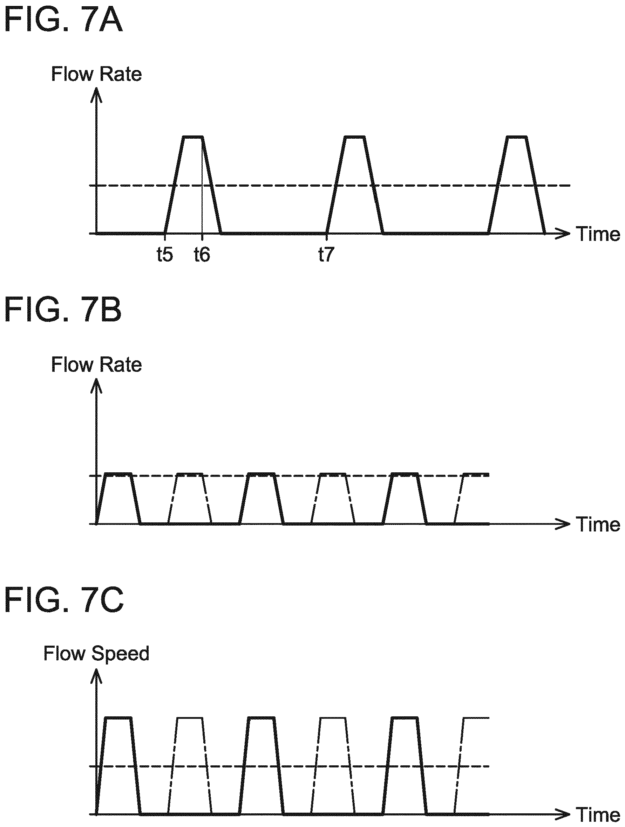

FIGS. 7A to 7C show changes in the flow rate or the flow speed of the atmospheric gas in a case where the time length of the first state is shorter than that of the second state. FIG. 7A shows the change in the flow rate of the atmospheric gas supplied from each set of the supply ports 48, 148, 248. A time length of the period t5 to t6 designed as being in the first state is set shorter than a time length of the period t6 to t7 designed as being in the second state. Further, FIG. 7B shows the change in the flow rate of the atmospheric gas in each group when each set of the supply ports 48, 148, 248 or each plurality of the pluralities of supply devices 40, 140, 240 is grouped into two groups and the atmospheric gas is supplied under a situation as such, and FIG. 7C shows the flow speed of the atmospheric gas supplied from each set of the supply ports 48, 148, 248 of FIG. 7B. As shown in FIGS. 7A to 7C, in the present embodiment as well, the flow speed of the atmospheric gas supplied from the respective supply ports 48 can be increased without increasing the supply volume of the atmospheric gas supplied into the heat treatment unit 12 during the heat treatment.

Further in the present embodiment, the total duration of the time period during which the atmospheric gas is supplied during the heat treatment is short. Due to this, the supply volume of the atmospheric gas supplied in to the heat treatment unit 12 during the heat treatment can be reduced, and energy required to heat the supplied atmospheric gas to the atmospheric temperature can be reduced. The flow rates of the atmospheric gas supplied from the respective sets of supply ports 48, 148, 248 in the first state may be increased within a range in which the supply volume of the atmospheric gas supplied in to the heat treatment unit 12 during the heat treatment is not increased. In this case, the flow speeds of the atmospheric gas supplied from the respective sets of supply ports 48, 148, 248 can further be increased.

### (Sixth Embodiment)

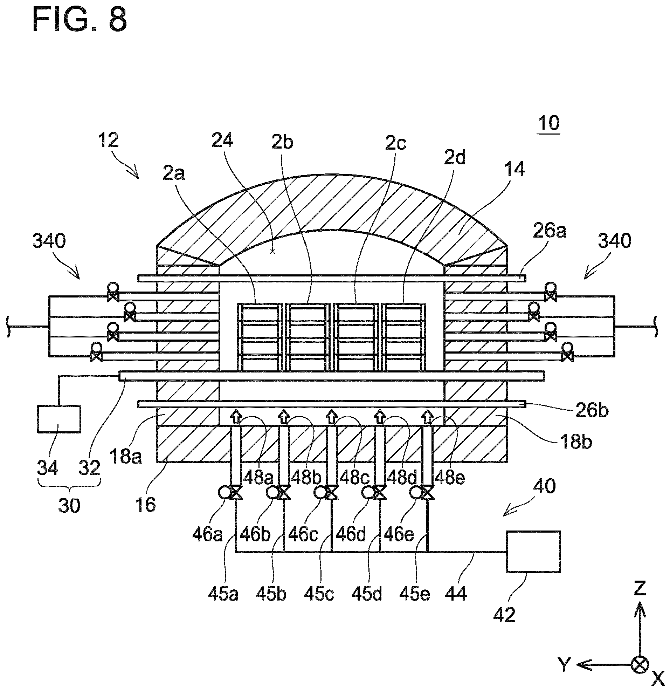

In the first to fifth embodiments as above, each set of the supply ports 48, 148, 248 is disposed such that the atmospheric gas is supplied along the up-down direction, however, no limitation is made to this configuration. For example, as shown in FIG. 8, supply devices 340 configured to supply the atmospheric gas laterally to the treatment objects 2 may be provided. In this case as well, a set of supply ports of each of the supply devices 340 are disposed to correspond to clearances between the treatment objects 2 arranged along the up-down direction when the treatment objects 2 are placed on the conveying rollers 32. In the present embodiment, both the supply devices 40 that supply the atmospheric gas from above and/or below the treatment objects 2 (only from below in FIG. 8) and the supply devices 340 that supply the atmospheric gas laterally toward the treatment objects 2 are provided, however, no limitation is made to this configuration. Only the supply devices 340 that supply the atmospheric gas laterally toward the treatment objects 2 may be provided without providing the supply devices 40, 140, 240 that supply the atmospheric gas from above and/or below the treatment objects 2.

In the first to sixth embodiments as above, the supply volume of the atmospheric gas changes for all of the supply ports 48, 148, 248 in each set, however, no limitation is made to this configuration. Control may be executed such that the supply volume of the atmospheric gas changes cyclically only for one or more of the supply ports 48, 148, 248 selected from among the set of supply ports 48, 148, 248. For example, control may be executed such that the supply volume of the atmospheric gas changes cyclically only for the supply port(s) 48, 148, 248 that are disposed at position(s) where the reactant gas tends to be generated from the treatment objects 2. Further, a maximum flow speed of the atmospheric gas supplied into the heat treatment unit may be configured to change gradually from the entrance to the exit. For example, a ratio of the period supplying the atmospheric gas and the period not supplying the atmospheric gas for each of the supply devices may be adjusted such that the maximum flow speed gradually increases from the entrance to a set intermediate position, and the maximum flow speed decreases from the set intermediate position to the exit.

Further, in the above embodiments, positions of the supply ports in the respective sets are configured to be same among the plurality of supply devices disposed with intervals in the conveying direction, however, no limitation is made to such a configuration, and positions and numbers of the supply ports may be varied in accordance with positions in the conveying direction.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A heat treatment furnace (10, 110) comprising:
a heat treatment unit (12) configured to heat-treat a treatment object (2);
a conveyor (30) provided in the heat treatment unit (12) and configured to convey the treatment object (2) from one end to another end of the heat treatment unit (12);
a heater (26, 26b) provided in the heat treatment unit (12) and configured to adjust a temperature in the heat treatment unit (12);
a supply flow path (44, 144, 244) having a supply port unit (48, 148, 248) configured to supply atmospheric gas into the heat treatment unit (12);
an adjustment valve unit (46, 146, 246) provided in the supply flow path (44, 144, 244) and configured to adjust a supply volume of the atmospheric gas supplied from the supply port unit (48, 148, 248); and
a control device (60) configured to control the adjustment valve unit (46, 146, 246) so that the supply volume from the supply port unit (48, 148, 248) changes cyclically while the treatment object (2) is conveyed from the one end to the other end of the heat treatment unit (12).

2. The heat treatment furnace (110) according to claim 1, wherein
the supply port unit (148, 248) comprises sets of supply ports (148a to 148g, 248a to 248g) arranged at intervals in a conveying direction of the treatment object (2), each set (148a to 148g, 248a to 248g) including a plurality of supply ports disposed along an orthogonal plane orthogonal to the conveying direction of the treatment object (2),
wherein
the supply volume from each of the supply ports (148, 248) is switched repeatedly and alternately between a first supply volume and a second supply volume smaller than the first supply volume, and
the control device (60) is configured to control the adjustment valve unit (146, 246) so that, for each set of supply ports (148a to 148g, 248a to 248g), the supply volumes from the set of supply ports (148a to 148g, 248a to 248g) change all at once.

3. The heat treatment furnace (10) according to claim 1, wherein
the supply port unit (48) comprises sets of supply ports (48a to 48e) arranged at intervals in a conveying direction of the treatment object (2), each set (48a to 48e) including a plurality of supply ports disposed along an orthogonal plane orthogonal to the conveying direction of the treatment object (2),
wherein
the supply volume from each of the supply ports (48) is switched repeatedly and alternately between a first supply volume and a second supply volume smaller than the first supply volume, and
the control device (60) is configured to control the adjustment valve unit (46) so that, for each set of supply ports (48a to 48e), when the supply volume from one supply port (48a, 48c, 48e) in the set of supply ports (48a to 48e) is the first supply volume, the supply volume from another supply port (48b, 48d) adjacent to the one supply port (48a, 48c, 48e) in the set of supply ports (48a to 48e) is the second supply volume, and when the supply volume from the other supply port (48b, 48d) is the first supply volume, the supply volume from the one supply port(48a, 48c, 48e) is the second supply volume.

4. The heat treatment furnace (10, 110) according to claim 1, wherein
the supply port unit (48, 148, 248) comprises sets of supply ports (48a to 48e, 148a to 148g, 248a to 248g) arranged at intervals in a conveying direction of the treatment object (2), each set (48a to 48e, 148a to 148g, 248a to 248g) including a plurality of supply ports disposed along an orthogonal plane orthogonal to the conveying direction of the treatment object (2),
wherein
when viewed along the conveying direction, positions of one set of supply ports (48a to 48e, 148a to 148g, 248a to 248g) are different from positions of another set of supply ports (48a to 48e, 148a to 148g, 248a to 248g) adjacent to the one set of supply ports (40, 140, 240),
the supply volume from each supply port (48, 148, 248) is switched repeatedly and alternately between a first supply volume and a second supply volume smaller than the first supply volume,
the control device (60) is configured to control the adjustment valve unit (46, 146, 246) so that, for each set of supply ports (48a to 48e, 148a to 148g, 248a to 248g), the supply volumes from the set of supply ports (48a to 48e, 148a to 148g, 248a to 248g) change all at once, and
the control device (60) is configured to control the adjustment valve unit (46, 146, 246) so that when the supply volume from one set of supply ports (48a to 48e, 148a to 148g, 248a to 248g) is the first supply volume, the supply volume from another set of supply ports (48a to 48e, 148a to 148g, 248a to 248g) adjacent to the one set of supply ports (48a to 48e, 148a to 148g, 248a to 248g) is the second supply volume, and when the supply volume from the other set of supply ports (48a to 48e, 148a to 148g, 248a to 248g) is the first supply volume, the supply volume from the one set of supply ports (48a to 48e, 148a to 148g, 248a to 248g) is the second supply volume.

5. The heat treatment furnace (110) according to claim 2 or 4, wherein
the adjustment valve unit (146, 246) comprises a plurality of adjustment valves (146, 246), and
each set of supply ports (148a to 148g, 248a to 248g) is adjusted by corresponding one of the plurality of adjustment valves (146, 246).

6. The heat treatment furnace (10, 110) according to any one of claims 2 to 5, wherein
the control device (60) is configured to control the adjustment valve unit (46, 146, 246) so that, each time a treatment object (2) passes through each orthogonal plane on which one set of the sets of the supply ports (48a to 48e, 148a to 148g, 248a to 248g) is provided, the atmospheric gas is supplied at least once from the one set of the sets of supply ports (48a to 48e, 148a to 148g, 248a to 248g) with the first supply volume.
